# EUROPÄISCHE PATENTSCHRIFT

(11) **EP 3 474 659 B1**
(45) Veröffentlichungstag und Bekanntmachung des Hinweises auf die Patenterteilung: **14.10.2020**
(21) Anmeldenummer: 17772456.4
(22) Anmeldetag: 23.08.2017
(51) Int. Cl.: A01K 1/01, A01K 1/015

(54) **ELEKTRISCHE BOLLENGABEL**
ELECTRIC MANURE FORK
FOURCHE ÉLECTRIQUE À FUMIER

(43) Veröffentlichungstag der Anmeldung: 01.05.2019
(73) Patentinhaber: VEBATO GmbH, 91344 Waischendorf (DE)
(72) Erfinder: BAUERNSCHMITT, Anton, 91344 Waischenfeld (DE)
(74) Vertreter: Küchler, Stefan
(86) Internationale Anmeldenummer: PCT/IB2017/000999
(87) Internationale Veröffentlichungsnummer: WO 2019/038572

(56) Entgegenhaltungen:
- WO-A1-93/14687
- DE-B4-102005 036 391
- US-A- 4 574 735
- US-A1- 2005 045 350
- US-A1- 2007 222 242
- US-A1- 2011 209 456

## Beschreibung

Die Erfindung richtet sich auf eine Gabel zum Aufsammeln von Tierbollen, insbesondere von Pferdeäpfeln, mit einem Stiel und einer Mehrzahl von Zinken, die nach Aktivieren eines elektromechanischen Betätigungselements von einer in dem Stiel angeordneten Rütteleinrichtung in schnelle Schwingungen versetzbar sind, um die Tierbollen von Spänen und anderem Streugut zu trennen.

Eine solche Gabel ist in der Patentschrift DE 10 2005 036 391 B4, deren Inhaber der Anmelder dieser Anmeldung ist, offenbart. Damit lassen sich einerseits zwar gute Ergebnisse erzielen; es hat sich andererseits jedoch gezeigt, dass diese Gabel in der Praxis noch verbesserungsbedürftig ist. Denn da sowohl die Schalteinrichtung als auch die Rütteleinrichtung im selben Stiel angeordnet ist und beide überdies den selben Strom führen, kann es den Kontakzungen der Schalteinrichtung Probleme bereiten, während der Rüttelphase einen zuverlässigen Kontakt beizubehalten. Vielmehr geraten auch die Kontaktzungen in Schwingungen, woraus kurze Kontaktunterbrechungen resultieren können, die jeweils mit einem kurzzeitigen Lichtbogen einhergehen. Zwar kommt dadurch der Stromfluss nicht zum Erliegen; die Kontaktzungen verrußen jedoch und es dauert nicht lange bis sich überhaupt kein Kontakt mehr zuverlässig herstellen lässt. Andere ähnliche Gabeln sind aus US/2005/045350 A1, US2011/0209456 A1 und US 2007/0222242 A1 bekannt.

Aus den Nachteilen des beschriebenen Standes der Technik resultiert das die Erfindung initiierende Problem, eine gattungsgemäße Gabel zum Aufsammeln von Tierbollen derart weiterzubilden, dass das elektromechanische Betätigungselement eine möglichst lange Betriebsdauer aufweist, während der eine zuverlässige Kontaktgabe als auch -unterbrechung gewährleistet ist.

Die Lösung dieses Problems gelingt dadurch, dass das elektromechanische Betätigungs-element mechanisch und/oder elektrisch von der Rütteleinrichtung unmittelbar entkoppelt ist, derart, dass allenfalls eine mittelbare, d.h. indirekte eine mechanische und elektrische Koppelung vorliegt.

Eine solche, mittelbare Koppelung ist gegeben über ein Dämpfungsglied, welches von der Rütteleinrichtung herrührende mechanische Schwingungen oder elektrische Ein-/Ausschaltimpulse nur in bedämpftem Ausmaß zu dem elektromechanischen Schalter passieren lässt. Als elektrische Entkopplungseinrichtung könnte dazu auch bspw. ein Verstärker dienen, an dessen Ausgangsanschlüsse ein Aktuator gekoppelt ist, während das elektromechanische Betätigungselement an dessen Eingang angeschlossen ist, wobei die am Ausgang auftretenden Schaltspitzen nur um den inversen Verstärkungsfaktor 1/A des Verstärkers vermindert oder in nach geringerem Ausmaß am Eingang ankommen.

Folgend der Erfindung wird die Rütteleinrichtung durch einen elektrischen Aktuator, insbesondere durch einen Elektromotor, angetrieben.

Ein elektrischer Antrieb erfordert weniger konstruktiven Aufwand als bspw. ein hydraulischer Antrieb.

Folgend der Erfindung fließt der Aktivierungsstrom des elektrischen Aktuators nicht durch das elektromechanische Betätigungselement. Eine derartige Entkopplung dient dem Schutz des Betätigungselements vor Strom- und Spannungsspitzen, wie sie insbesondere beim Ein- und/oder Ausschalten auftreten können.

Der Aktivierungsstrom des elektrischen Aktuators kann vielmehr durch ein kontaktloses, elektronisches Schaltelement fließen, das zu seiner Betätigung mit dem elektromechanischen Betätigungselement elektrisch gekoppelt ist. Ein elektronisches Schaltelement hat den Vorteil, dass keinerlei mechanische Kontakte vorhanden sind, welche ja durch die starken Schwingungen beim Rütteln an ihrer mechanischen Stabilität einbüßen oder gar Schaden nehmen könnten. Ein elektronisches Schaltelement, also bspw. ein Transistor, Thyristor, Triac, Operationsvertärker od. dgl. hat solche Einschränkungen nicht.

Folgend der Erfindung ist das elektromechanische Schaltelement nicht an dem Stiel selbst angeordnet, sondern nur mittelbar mit jenem verbunden, d.h.indirekt. Auch dies ist eine Maßnahme, um mechanische Erschütterungen von dem elektromechanischen Betätigungselement fernzuhalten.

Folgend der Erfindung wird das elektromechanische Schaltelement an einem mit dem oberseitigen Ende des Stiels verbundenen Griff anzuordnen. Damit lassen sich verschiedene positive Effekte nutzen. Einerseits ist das Schaltelement dort schon allein durch die Länge des Stiels maximal weit von der Quelle der Erschütterungen, also der Rütteleinrichtung, entfernt. Andererseits gibt es zwischen dem Stiel und dem Griff eine Schnittstelle, indem jene beiden Teile nicht miteinander integriert sind, und an dieser Schnittstelle kann eine weitere Bedämpfung der Erschütterungen vorgenommen werden.

Folgend der Erfindung wird der Griff mit dem oberseitigen Ende des Stiels zusammengesteckt sowie ggf. fixiert ist. Durch eine solche Steckverbindung haben der Griff und der Stiel eine geringere Berührungsfläche als bspw. bei einem Zusammenschrauben von Griff und Rohr. Je kleiner die Berührungsfläche ist, um so geringer ist die Übertragung von Erschütterungen von dem Stiel auf den Griff.

Folgend der Erfingung werden die einander zugewandten Steckflächen eines oder beider Steckelemente mit jeweils einem oder mehreren Vorsprüngen versehen sind, so dass nur diese Vorsprünge in Kontakt mit dem anderen Steckelement treten. Indem dadurch die restliche Fläche zwischen den Vorsprüngen von der gegenüber liegenden Steckfläche zurücktritt, gibt es dort keine Berührung, sondern nur an den Vorsprüngen selbst. Die Schwingungsübetragung wird dadurch weiter minimiert.

Es hat sich bewährt, dass an der Innenseite einer an dem Griff angeordneten Steckmuffe mehrere Vorsprünge vorgesehen sind, welche mit der betrefenden Oberfläche des Stiels in Kontakt treten, und/oder umgekehrt. Wenn die Steckmuffe des Griffs den Stiel außen nach Art einer Schürze umgreift, sollten die Erhebungen an der Innenseite dieser Schürze bzw. Steckmuffe angeordnet sein. Anderenfalls, d.h., falls ein Steckanschluss des Griffs in das hohle Rohr des Stiels eingreift, müssten die Erhebungen an dem Außenumfang des Steckanschlusses angeordnet werden. Da der Griff üblicherweise als Spritzgußteil aus Kunststoff angefertigt wird, der Stiel dagegen meist aus einem Metallrohr besteht, können solche Erhebungen leichter an dem Griff angeformt werden als an dem Stiel.

Solche Vorsprünge können als längliche Erhebungen ausgebildet sein, insbesondere mit einer Längsachse parallel zu der Längsachse des Stiels. Dadurch stören diese Erhebungen beim Entformen des Griffes nicht. Andererseits lassen sich ausreichend viele derartige Erhebungen um den Umfang der Steckmuffe oder des Steckanschlusses verteilt anordnen, bevorzugt wenigstens drei um je 120° versetzte Erhebungen, besser wenigstens vier um je 90° verschobene Erhebungen, noch besser sind bspw. sechs um jeweils 60° versetzte Erhebungen, so dass trotz des geringen physischen Kontaktes eine präzise und wackelfreie Führung des Griffs am Stiel erzielbar ist.

Der mit dem Stiel zusammenfügbare, insbesondere zusammensteckbare Griff kann einen für sich genommen länglichen, quer zur Längsachse des Stiels verlaufenden, stegförmigen Greifbereich aufweisen. Mit einem solchen, quer zum Stiel verlaufenden Greifsteg hat eine mit der Gabel arbeitende Person auch eine optimale Kontrolle über die jeweilige Drehstellung der Gabel um die Längsachse des Stiels. Ein Arbeiter kann damit das versehentliche Herabrollen von Bollen gut vermeiden.

An einem oder vorzugsweise beiden Enden des stegförmigen Greifbereichs lässt sich je ein Verbindungsschenkel vorsehen. Solche endseitige Verbindungsschenkel dienen dem Zweck, den Greifsteg fest mit dem Stiel zu verbinden, ohne dabei den Handhabungsspielraum für die Hand einer Person einzuengen.

Dadurch, dass die beiden freien Enden der über den stegförmigen Greifbereich miteinander verbundenen Verbindungsschenkel von dem stegförmigen Greifbereich aus zueinander konvergieren, wird der Tatsache Rechnung getragen, dass im Allgemeinen der Stieldurchmesser erheblich kleiner ist als die Länge des Greifstegs, so dass der Abstand zwischen den beiden Verbindungsschenkeln nahe dem Stiel am kleinsten sein sollte und sich von dort zu dem Greifsteg hin vergrößern kann.

Um den Zusammenbau eines solchen Griffs mit dem Gabelstiel zu erleichtern, empfiehlt die Erfindung, dass die beiden freien Enden der über den stegförmigen Greifbereich miteinander verbundenen Verbindungsschenkel an ihren freien Enden jeweils mit einem Steckanschluss verbunden sind, insbesondere mit einer Steckmuffe. Letztere(r) dient dann dem Zusammenfügen mit dem Stiel, der im allgemeinen als rundes Hohlrohr ausgebildet ist.

Der stegförmige Greifbereich bildet zusammen mit den beiden Verbindungsschenkeln und der Steckmuffe eine Art Ring mit einer freien Greifausnehmung in der Mitte, welche einen optimalen Zugang zu dem Greifsteg bietet.

Eine solche Konstruktion bietet die Möglichkeit einer derartigen Weiterbildung, dass ein beweglicher, von außen zugänglicher Teil des elektromechanischen Betätigungselements sich von dem stegförmigen Greifbereich aus nach innen in den Innenraum des ringförmigen Griffs hinein erstreckt, wo der für eine Betätigung zugängliche, bewegliche Teil des elektromechanischen Betätigungselements von der ringförmigen Gestalt des Griffs schützend umgeben ist. Sollte bspw. eine erfindungsgemäße Bollengabel einmal umfallen, kann das mehr innerhalb des Griffs angeordnete, nach innen gerichtete Betätigungselement kaum beschädigt werden.

Ferner könnte ein Schaltelement auch bspw. unter Nässe leiden, und/oder unter eindringenden (Schmutz-) Partikeln. Um auch einem solchen, negativen Einfluß vorzubeugen, ist erfindungsgemäß vorgesehen, dass ein beweglicher, von außen zugänglicher Teil des elektromechanischen Betätigungselements von einer vorzugsweise gummielastischen Kappe schützend umgeben ist. Dadurch ist das unter der Kappe verborgene Betätigungselement der atmosphärischen Umgebung entzogen, so dass weder Feuchtigkeit noch andere Chemikalien eindringen können. Die gummielastische Kappe kann andererseits durchsichtig ausgebildet sein, so dass das darunter verborgene Schaltelement für eine Person sofort sichtbar ist.

Eine weitere Optimierung erfährt die Erfindung dadurch, dass die gummielastische Kappe zu ihrer Fixierung zwischen dem Korpus des Griffs und dem Gehäuse des elektromechanischen Betätigungselements eingeklemmt ist. Durch diese Klemmung wird einerseits eine optimale Dichtheit erreicht, so dass an dieser Anschlussstelle weder Flüssigkeiten noch Partikel eindringen können. Andererseits wirkt der eingeklemmte Rand der gummielastischen Kappe wie eine Art Vibrationsdämpfung, da Körperschall durch das weiche Material der gummielastischen Kappe hindurch nur mit verminderter Amplitude von dem Griff zu dem Gehäuse des Schalters hin vordringen kann.

Innerhalb eines als Hohlrohr ausgebildeten Stiels ist Platz vorhanden zur Aufnahme eines oder mehrerer Akkus oder Batterien zur Versorgung eines elektrischen Aktuators der Rütteleinrichtung mit Strom. Zur Steigerung der Ladekapazität können mehrere Akkus miteinander gekoppelt werden. Um dabei eine ausreichende Spannung zum Betrieb eines Aktuators zur Verfügung zu stellen, sieht die Erfindung vor, dass mehrere Akkus in Reihe geschalten sein können. Bevorzugt handelt es sich dabei um etwa zylindrische, etwa batterieförmige Einheiten, die untereinander Pol an Pol verlötet sein können, so dass ein inniger Kontakt gewährleistet ist und sich eine Art Säule ergibt, die leicht innerhalb des Stiels untergebracht werden kann.

Um eine solche Akku-Säule und insbesondere deren Lötverbindungen ebenfalls etwas vor den Erschütterungen beim Rütteln abzuschirmen, kann ein solcher, länglicher Akku-Pack durch eine Art Schlauch ummantelt sein, so dass die Akkus nicht unmittelbar an der Innenseite des Stiel-Rohrs anliegen.

Ferner sollten ein oder mehrere Akkus über ein Ladegerät aufladbar sein, insbesondere über ein mit dem Stromnetz gekoppeltes oder koppelbares Ladegerät. Damit ist langfristig ein autarker Betrieb möglich, wobei die Ladezeit im Allgemeinen von der Ladekapazität der Akkus und/oder von dem Entladezustand abhängt, wobei letzterer wiederum von de Größe eines auszumistenden Stalles od. dgl. abhängt. Im Allgemeinen wird jedoch eine nächtliche Ladung ausreichend sein, damit der Akku am Morgen voll ist, so dass die elektrische Bollengabel für die normale Stallarbeit in vollem Umfang zur Verfügung steht.

Zwar könnte ein solches Ladegerät auch innerhalb des Stiels oder Griffes integriert sein, was jedoch den Nachteil eines erhöhten Gewichts mit sich bringt, so dass ein Arbeiter leichter ermüden kann. Deshalb wird erfindungsgemäß eine vorzugsweise lösbare Schnittstelle zur Verbindung der Akkus mit dem Ladegerät vorgeschlagen, so dass die erfindungsgemäße Bollengabel während der Arbeit von jeglichem Netzkabel frei ist.

Eine solche Schnittstelle kann als Steckverbindung ausgebildet sein, insbesondere als Steckbuchse. Damit kann zum Aufladen eine galvanische Verbindung hergestellt werden, die aber zum Arbeiten mit der Bollengabel rasch unterbrochen werden kann.

Es liegt im Rahmken der Erfindung, dass die Steckeinrichtung, insbesondere Steckbuchse, an dem von dem Stiel vorzugsweise lösbaren Griff angeordnet ist. Dort kann bei der Griff-Herstellung, insbesondere während des Spritzgußvorgangs, eine zum Einbau einer Steckbuchse geeignete Stelle vorgesehen werden, in welche dann die Steckeinrichtung passend eingesetzt werden kann.

Schließlich entspricht es der Lehre der Erfindung, dass die Zinken der Gabel vorzugsweise aus Kunststoff bestehen, während der Stiel der Gabel vorzugsweise aus Metall besteht. Indem das Massenverhältnis zwischen dem Stiel und Griff einerseits und den Zinken andererseits möglichst groß ist, können die leichten Zinken eine weitaus stärkere Beschleunigung erfahren als der Stiel. Dies dient ebenfalls dem Zweck, während des Rüttelvorgangs die Erschütterungen in dem Stiel in Grenzen zu halten. Eine größere Masse hat ja im Allgemeinen eine niedrigere Resonanzfrequenz als eine leichtere Masse, und diese Tatsche erlaubt es, die Rüttelfrequenz möglichst genau auf diehöhere Resonanzfrequenz der zinken einzustellen, so dass jene etwa in Resonanz schwingen, während der Stiel nicht mit seiner Resonanzfrequenz schwingt, also mit einer weitaus kleineren Amplitude.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:
- Fig. 1: eine erfindungsgemäße Bollengabel in der Vorderansicht;
- Fig. 2: einen Längsschnitt durch die Rütteleinrichtung der Bollengabel aus Fig. 1, in einer vergrößerten Darstellung;
- Fig. 3: den Handgriff der Bollengabel aus Fig. 1, ebenfalls in einer vergrößerten Darstellung; sowie
- Fig. 4: ein Schaltbild der elektrischen Einrichtungen der Bollengabel aus Fig. 1.

In der Zeichnung ist eine erfindungsgemäße, elektrische Bollengabel 1 wiedergegeben, die zum Aufsammeln von Tierbollen, insbesondere von Pferdeäpfeln, verwendet werden kann.

Man erkennt einen langgestreckten Stiel 2, vorzugsweise mit einer Länge von 1 Meter bis 1,50 Meter, oder mehr. Der Stiel 2 besteht in seinem oberen und mittleren Bereich bevorzugt aus einem Metallrohr.

Am unteren Ende der Bollengabel 1 erkennt man eine Mehrzahl von Gabelzinken 3. Bevorzugt bestehen diese Zinken 3 aus Kunststoff und sind daher deutlich leichter als der Stiel 2.

Im oberen Bereich der Bollengabel 1 befindet sich ein elektromechanisches Betätigungselement 4, das bei seiner Betätigung den Rüttelvorgang auslöst.

Dabei wird eine in dem Stiel 2 angeordnete Rütteleinrichtung 5 in schnelle Schwingungen versetzt, und damit auch die Zinken 3, um dadurch die Tierbollen von Spänen und anderem Streugut zu trennen.

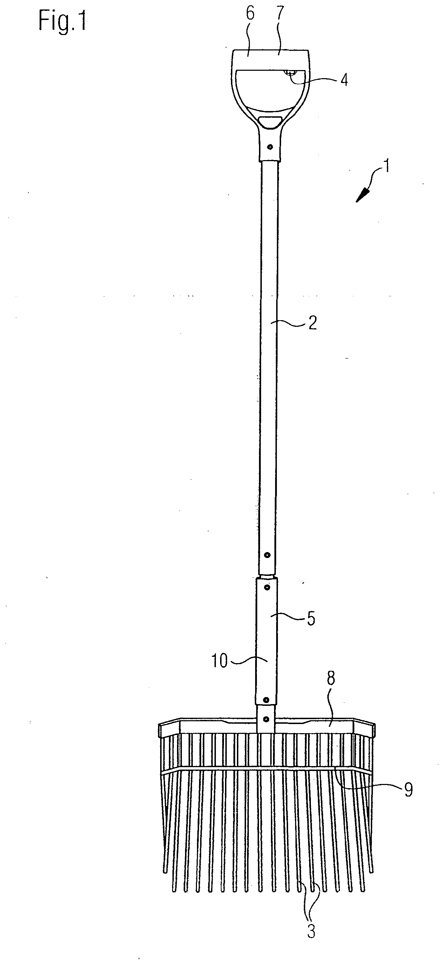

Man erkennt in Fig. 1 ferner, dass am oberen Ende des Stiels 2 ein Griff 6 angeordnet ist mit einem quer verlaufenden Greifsteg 7, ähnlich wie bei einem Spaten.

Außerdem ist zu sehen, dass die verschiedenen Zinken 3 mit ihren rückwärtigen Enden an einem Joch 8 verankert sind und zur Verbesserung ihrer Stabilität diesseits des Jochs 8 nochmals durch einen zusätzlichen Steg 9 untereinander verbunden sind. Durch das Joch 8 und den zusätzlichen Steg 9 sind alle Zinken 3 untereinander sowie gemeinsam an die Rütteleinrichtung 5 gekoppelt, so dass sie von jener eine maximale Schwingungsamplitude übernehmen können.

Weitere Einzelheiten der Anordnung findet man in den auf die Fig. 1 folgenden Detailzeichnungen.

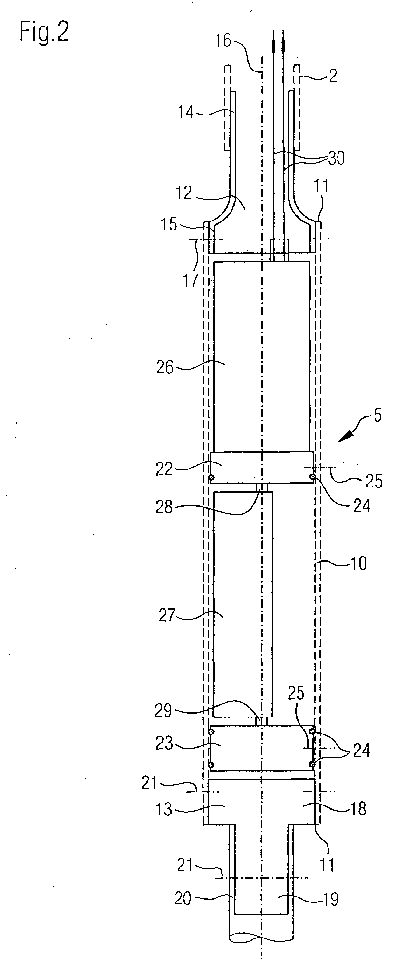

Die Darstellung in Fig. 2 ist besonders der Rütteleinrichtung 5 gewidmet:
Die Rütteleinrichtung 5 ist in einem beispielsweise rohrförmigen, vorzugsweise querschnittlich erweiterten Gehäuse 10 am unteren Ende des Stiels 2 aufgenommen. An den beiden offenen Stirnseiten 11 des Gehäuses 10 der Rütteleinrichtung 5 ist je ein Adapter 12, 13 zur Verbindung mit dem Stiel 2 einerseits sowie mit dem Joch 8 der Zinken 3 andererseits vorhanden.

Der Adapter 12 zur Verbindung des Gehäuses 10 der Rütteleinrichtung 5 mit dem Stiel 2 weist zwei Enden 14, 15 mit unterschiedlichem Querschnitt auf. Das Ende 14 zum Einsetzen in den Stiel 2 hat einen kleineren Querschnitt als das Ende 15 zum Einsetzen in das Gehäuse 10. Jeweils mittels radial zu der Längsachse 16 verlaufenden Schraubverbindungen 17 können diese Teile aneinander festgelegt werden.

Durch Übergangs- oder Presspassungen zwischen Stiel 2 und Adapter 12 einerseits sowie zwischen Adapter 12 und Gehäuse 10 andererseits kann sichergestellt werden, dass die Teile spielfrei zusammengefügt werden können. De Adapter 12 ist hohl, damit dort Kabel hindurchgeführt werden können.

Ebenso hat der Adapter 13 zur Verbindung des Gehäuses 10 der Rütteleinrichtung 5 mit dem Joch 8 ebenfalls zwei Enden 18, 19 mit unterschiedlichem Querschnitt.

Das Ende 18 zum Einsetzen in das Gehäuse 10 hat einen größeren Querschnitt als das Ende 19 zum Einsetzen in eine rückwärtige Steckmuffe 20 des Jochs 8. Jeweils mittels radial zu der Längsachse 16 verlaufenden Schaubverbindungen 21 können diese Teile aneinander festgelegt werden.

Durch Übergangs- oder Presspassungen zwischen Gehäuse 10 und Adapter 13 einerseits sowie zwischen dem Adapter 13 und der Steckmuffe 20 des Jochs 8 andererseits ist sichergestellt, dass diese Teile ohne Spiel zusammenfügbar sind.

Innerhalb des Gehäuses 10 sind zwei Drehlagerungen 22, 23 in axialer Richtung entlang der Längsachse 16 mittels O-Ring-Dichtungen 24 einerseits und mittels radialer Schrauben 25 andererseits festgelegt. An der Oberseite des Außenrings der oberen Drehlagerung 22 ist das Gehäuse eines elektrischen Aktuators in Form eines Elektromotors 26 festgelegt, insbesondere festgeschraubt, derart, dass sein Drehanschluss durch den Innenring der oberen Drehlagerung 22 hindurch zugänglich ist.

Zwischen den beiden Drehlagerungen 22, 23 befindet sich ein Exzenter 27, insbesondere in Form eines Profils, an dessen beiden Stirnseiten jeweils außermittig ein Lagerzapfen 28, 29 angeformt ist. Diese beiden Lagerzapfen 28, 29 sind konzentrisch an den Innenringen der Drehlagerungen 22, 23 geführt bzw. gelagert, so dass bei einer Drehung der Lagerzapfen 28, 29 der Schwerpunkt des Exzenters 27 um die Längsachse 16 umläuft und dabei eine Unwucht erzeugt.

Der Elektromotor 26 ist bevorzugt als Gleichstrommotor ausgebildet, mit einer Nennspannung in der Größenordnung von etwa 12 Volt. Seine beiden Anschlüsse 30 laufen innerhalb des Gehäuses 10, durch den oberen Adapter 12 und weiter durch den Stiel 2 nach oben, bis zu einer im oberen Teil des Stiels 2 angeordneten Steuerelektronik 31.

Diese Steuerelektronik 31 empfängt außerdem zwei Anschlüsse 32 eines Akkupacks 33, der ebenfalls innerhalb des Stiels 2 angeordnet ist. Es kann sich dabei um mehrere, in Reihe geschaltete Akkus handeln, wobei jeweils ein Pluspol eines Akkus mit dem Minuspol des anderen zusammengeschalten ist und verlötet ist. Damit dieser Akkupack 33 nicht durch von der Rütteleinrichtung 5 ausgelöste Erschütterungen in Mitleidenschaft gezogen werden kann, ist er in einen weichen Schlauch geschoben und durch diesen von dem Stiel 2 mechanisch entkoppelt.

Von der Steuerelektronik 31 laufen ferner vier Drähte 34, 35 nach oben zu dem Griff 6, der auf das obere Ende des Stiels 2 aufgesteckt ist.

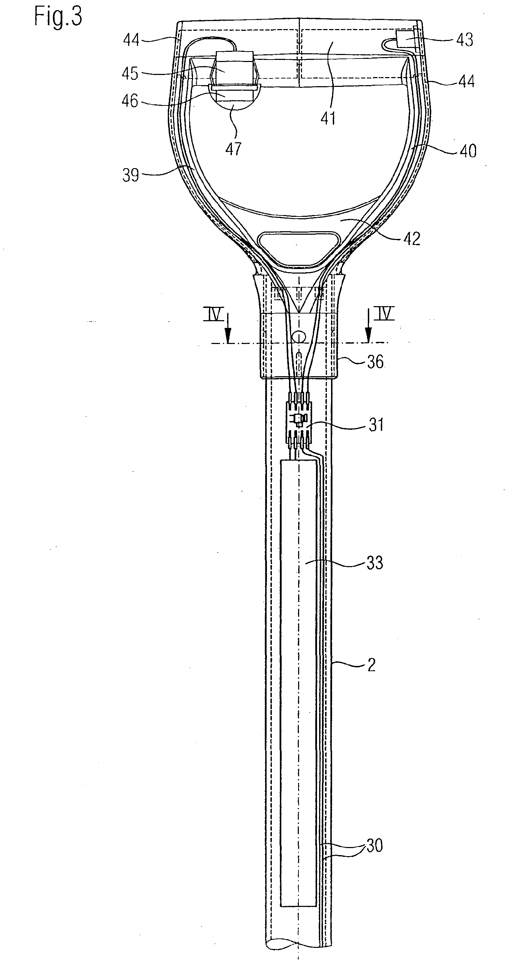

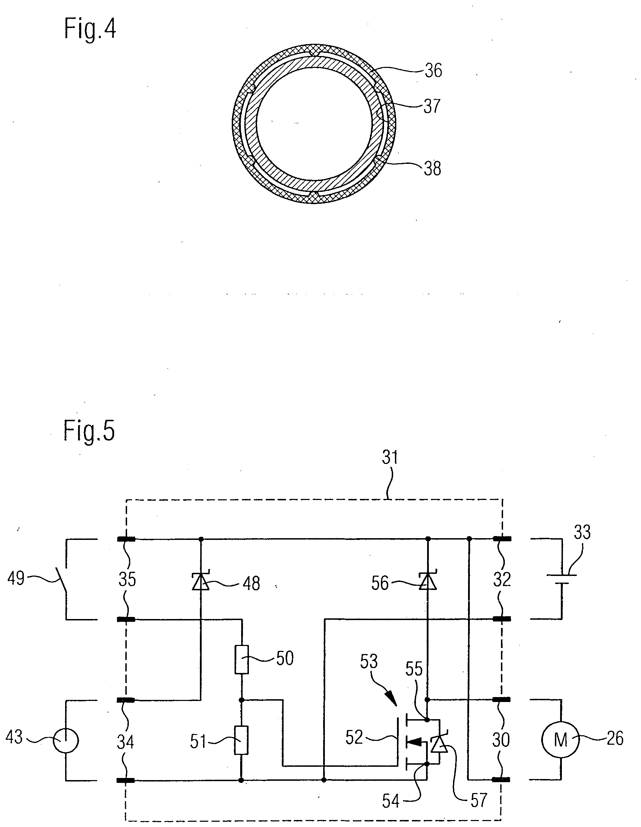

Man erkennt in Fig. 3, dass der Griff 6 an seiner Unterseite einen angeformten, muffenförmigen Steckanschluss 36 aufweist, mit einer zentralen Ausnehmung, in welche das obere Ende des Stiels 2 hineinpasst. Dabei ist in Fig. 4 zu sehen, dass an der Innenseite 37 des muffenförmigen Steckanschlusses 36 nach innen vorspringende Rippen 38, vorgesehen sind, insbesondere parallel zu der Längsachse 16 verlaufende Rippen 38. Dies dient dem Zweck, die Kontaktfläche zwischen dem Stiel 2 und dem Griff 6 zu minimieren, nämlich auf etwa linienförmige Berührungen längs dieser Rippen 38. Infolge dieses reduzierten Kontakts wird auch die Übertragung von Erschütterungen von dem Stiel 2 auf den Griff 6 reduziert, bzw. bedämpft.

In Fig. 2 erkennt man den inneren Aufbau des Griffs 6 im Detail:
An den muffenförmigen Steckanschluss 36 schließen sich zwei diametral gegenüber liegende Verbindungsschenkel 39, 40 an, welche von dem Steckanschluss 36 ausgehend voneinander divergieren.

Im Bereich ihrer freien Enden sind diese beiden Verbindungsschenkel 39, 40 durch einen Greifsteg 41 miteinander verbunden; ferner kann noch nahe der Steckmuffe 36 ein weiterer Verbindungssteg 42 vorgesehen sein, um den muffenförmigen Steckanschluss 36 vor allzu hohen Spreizkräften zu bewahren. Bevorzugt hat der Greifsteg 41 einen etwa kreisförmigen Querschnitt, damit er gut in der Hand liegt.

Die beiden Verbindungsschenkel 39, 40 sind mit je einem Kanal zur Aufnahme je eines Drahtpaares 34, 35 versehen. Darin führt ein erstes Adernpaar 34 von der Steuerelektronik 31 durch einen Verbindungsschenkel 40 zu einem Steckanschluss 43 für eine nicht dargestellte Ladeeinrichtung, mit welcher der Akkupack 33 aufgeladen werden kann. Bevorzugt ist der Steckanschluss 43 an einer Stirnseite 44 des Greifstegs 41 angeordnet, in jene Stirnseite 44 hinein versenkt, so dass bei einem versehentlichen Stoß keine Teile beschädigt werden können.

Das zweite Adernpaar 35 führt vorzugsweise durch den anderen Verbindungsschenkel 39 bis zu einem in den Greifsteg 41 an dessen Innenseite eingelassenen elektromechanischen Betätigungselement 45. Dieses Betätigungselement 45 ist möglichst tief in den Greifsteg 41 eingelassen und außerdem mit seiner freien Betätigungsfläche 46 dem muffenförmigen Steckansschluss 36 zugewandt, wird also durch die benachbarten Verbindungsschenkel 39, 40 vor Beschädigungen infolge von Stößen geschützt.

Man kann in Fig. 3 erkennen, dass das eigentliche, bewegliche, drucksensitive Teil 46 des elektromechanischen Betätigungselements 45 durch eine gummielastische Abdeckkappe 47 vor der Umwelt geschützt ist, und damit insbesondere vor Feuchtigkeit und sonstigen Chemikalien.

Das Betätigungselement 45 ist bevorzugt als elektrischer Drucktaster ausgebildet, welcher bei mechanischem Druck auf die Betätigungsfläche 46 einen Stromkreis schließt, der ansonsten, d.h. ohne einen solchen mechanischen Druck, offengehalten wird, bspw. von einem innerhalb des Betätigungselements 45 angeordneten Federelement od. dgl.

Bei der Steuerelektronik 31 treffen also insgesamt acht Adernpaare 30, 32, 34, 35 zusammen, nämlich ein erstes Adernpaar 30 zu dem Elektromotor 26, ein zweites Adernpaar 32 zu dem Akkupack 33, ein drittes Adernpaar 34 zu dem Ladeanschluss 43, und ein viertes Adernpaar 35 zu dem mechanischen Betätigungselement 45.

Die Schaltung auf der Platine der Steuerelektronik 31 ist in Fig. 5 zu sehen. Man erkennt dort zunächst, dass eine Ader des Adernpaars 32 zu dem Akkupack 33 galvanisch, d.h. ohne jegliches zwischengeschaltetes Bauteil mit einer Ader des Adernpaars 34 zu dem Ladeanschluss 43 verbunden ist; die anderen Adern dieser beiden Adernpaare 32, 34 sind über eine Diode 48 miteinander verbunden. Somit schließt sich ein Stromkreis zwischen dem Ladeanschluss 43 und dem Akkupack 33, welche jedoch aufgrund der Diode 48 nur einen Stromfluß in einer bestimmten Richtung erlaubt, nämlich in Laderichtung zwischendem Ladeanschluss 43 und dem Akkupack 33.

Daher beginnt sofort beim Einstecken des Ladeadapters in den Ladeanschluss 43 der Ladevorgang und dauert so lange an, bis der Akkupack 33 vollständig geladen ist.

Der Schalter 49 des elektromechanischen Betätigungselements 45 ist ebenfalls mit einem seiner beiden Anschlüsse unmittelbar an dem Akkupack 33 angeschlossen, mit dem anderen Anschluss des Akkupacks 33 dagegen über einen eingeschalteten Spannungsteiler mit den Widerständen 50, 51.

Der Mittelabgriff dieses Spannungsteilers zwischen den beiden Widerständen 50, 51 ist mit dem Steueranschluss 52 eines elektronischen Schaltelements 53 angeordnet. Bei dem elektronischen Schalteelement 53 handelt es sich bevorzugt um einen Transistor, vorzugsweise um einen Feldeffekttransistor, insbesondere um einen Metall-Oxid-Halbleiter-Transistor oder - feldeffekttransistor (MOSFET-Transistor).

Die Leistungsanschlüsse 54, 55 des elektronischen Schaltelements 53 sind - vorzugsweise über eine mit dem Schaltelement 53 in Reihe geschaltete, bevorzugt in Sperrichtung betriebene Diode 56 - zwischen die beiden Anschlüsse 32 des Akkupacks 33 angeschlossen.

Dabei sind die beiden Anschlüsse der bevorzugt in Sperrichtung betriebenen Stromrichterdiode 56 als Anschlüsse 30 für den Elektromotor 26 herausgeführt.

Schließlich ist zwischen den beiden Leistungsanschlüssen 54, 55 des elektronischen Schaltelements 53 eine weitere Diode 57 angeschlossen, jedoch ebenfalls wie die Stromrichterdiode 56 auch in Sperrichtung. Diese Diode 57 bildet mit der Diode 56 eine Reihenschaltung, welche die beiden Anschlüsse 32 des Akkupacks 33 überbrückt; dabei ist die Polarität beider Dioden 56, 57 jedoch so gewählt, dass die Spannung des Akkupacks 33 keinen Strom durch diese Dioden 56, 57 treiben kann.

Wird nun der Schalter 49 geschlossen und demzufolge über den Spannungsteiler mit den Widerständen 50, 51 an dem Steueranschluss 52 des elektronischen Schaltelements 53 ein aktives Ansteuersignal angelegt, so wird das elektronische Schaltelement 53 in den leitenden Zustand versetzt. Nun kann ein Strom durch den Elektromotor 26 fließen.

Wird andererseits der Schalter 49 wieder geöffnet, so geht das elektronische Schaltelement 53 mangels eines aktiven Ansteuersignals an seinem Steueranschluss 52 wieder in den sperrenden Zusand über. Dennoch muss der Motorstrom des Elektromotors 26 nicht schlagartig unterbrochen werden, sondern kann - je nach Stromrichtung - noch über eine der beiden Dioden 56, 57, sowie ggf. über den Akkupack 33 abklingen, so dass Überspannungen und daraus potentiell folgende Beschädigungen vermieden werden.

Das elektronische Schaltelement 53 sorgt dafür, dass der Motorstrom jedoch nie über den Schalter 49 des elektromechanischen Betätigungselements 45 fließen kann. Die beiden Widerstände 50, 51 des Spannungsteilers können so hochohmig bemessen werden, dass über den Schalter 49 nur ein minimaler Strom fließt, bspw. im Bereich eines Milliampers, der bei Unterbrechung der Kontakte keinen Lichtbogen speisen kann, so dass ein Verrußen der Kontakte des Schalters 49 nicht zu befürchten ist.

### Bezugszeichenliste

| | | | |
|---|---|---|---|
| 1 | Gabel | 26 | Elektromotor |
| 2 | Stiel | 27 | Exzenter |
| 3 | Zinken | 28 | Lagerzapfen |
| 4 | Betätigungselement | 29 | Lagerzapfen |
| 5 | Rütteleinrichtung | 30 | Anschlüsse |
| 6 | Griff | 31 | Steuerelektronik |
| 7 | Greifsteg | 32 | Anschlüsse |
| 8 | Joch | 33 | Akkupack |
| 9 | zusätzlicher Steg | 34 | Drähte |
| 10 | Gehäuse | 35 | Drähte |
| 11 | Stirnseite | 36 | Steckanschluss |
| 12 | Adapter | 37 | Innenseite |
| 13 | Adapter | 38 | Rippen |
| 14 | Ende | 39 | Verbindungsschenkel |
| 15 | Ende | 40 | Verbindungsschenkel |
| 16 | Längsachse | 41 | Greifsteg |
| 17 | Schraubverbindung | 42 | Verbindungssteg |
| 18 | Ende | 43 | Steckanschluss |
| 19 | Ende | 44 | Stirnseite |
| 20 | Steckmuffe | 45 | Betätigungselement |
| 21 | Schraubverbindung | 46 | Betätigungsfläche |
| 22 | Drehlagerung | 47 | Abdeckkappe |
| 23 | Drehlagerung | 48 | Diode |
| 24 | O-Ring-Dichtung | 49 | Schalter |
| 25 | Schraube | 50 | Widerstand |
| 51 | Widerstand | | |
| 52 | Steueranschluss | | |
| 53 | Schaltelement | | |
| 54 | Leistungsanschluss | | |
| 55 | Leistungsanschluss | | |
| 56 | Diode | | |
| 57 | Diode | | |

## Patentansprüche

1. Gabel (1) zum Aufsammeln von Tierbollen, insbesondere von Pferdeäpfeln, mit einem Stiel (2) und einer Mehrzahl von Zinken (3), die nach Aktivieren eines elektromechanischen Betätigungselements (4) von einer in dem Stiel (2) angeordneten Rütteleinrichtung (5) in schnelle Schwingungen versetzbar sind, um die Tierbollen von Spänen und anderem Streugut zu trennen, wobei die Rütteleinrichtung (5) durch einen Elektromotor (26) angetrieben wird, **dadurch gekennzeichnet, dass** die Koppelung zwischen dem elektromechanischen Betätigungselement (4) und der Rütteleinrichtung (5) ein Dämpfungsglied umfasst, welches von der Rütteleinrichtung (5) herrührende mechanische Schwingungen oder elektrische Ein-/Ausschaltimpulse nur in bedämpftem Ausmaß zu einem elektromechanischen Schalter (49) des elektromechanischen Betätigungselements (4) passieren lässt, wobei
a) der elektromechanischen Schalter (49) des elektromechanischen Betätigungselements (4) nicht an dem Stiel (2) selbst angeordnet ist, sondern mittelbar mit jenem verbunden ist, nämlich an einem mit dem oberseitigen Ende des Stiels (2) zusammengesteckten Griff (6) angeordnet ist, wobei die einander zugewandten Steckflächen eines oder beider Steckelemente mit jeweils einem oder mehreren Vorsprüngen (38) versehen sind, so dass nur diese Vorsprünge (38) in Kontakt mit dem anderen Steckelement treten, und wobei
b) der Aktivierungsstrom des Elektromotors (26) nicht durch den elektromechanischen Schalter (49) des elektromechanischen Betätigungselements (4) fließt, sondern durch ein kontaktloses, elektronisches Schaltelement (53), das zu seiner Betätigung mit dem elektromechanischen Schalter (49) des elektromechanischen Betätigungselements (4) elektrisch gekoppelt ist.

2. Gabel (1) nach Anspruch 1, **dadurch gekennzeichnet, dass** der mit dem oberseitigen Ende des Stiels (2) zusammengesteckte Griff (6) fixiert ist.

3. Gabel (1) nach Anspruch 1 oder 2, **dadurch gekennzeichnet, dass** an der Innenseite (37) eines mit dem Griff (6) verbundenen, muffenförmigen Steckansschlusses (36) mehrere Vorsprünge (38) vorgesehen sind, welche mit der betrefenden Oberfläche des Stiels (2) in Kontakt treten, und/oder umgekehrt, insbesondere wobei jeder Vorsprung (38) als längliche Erhebungen ausgebildet ist, insbesondere mit einer Längsachse parallel zu der Längsachse (16) des Stiels (2).

4. Gabel (1) nach einem der vorhergehenden Ansprüche, **dadurch gekennzeichnet, dass** der mit dem Stiel (2) zusammenfügbare, insbesondere zusammensteckbare Griff (6) einen für sich genommen länglichen, quer zur Längsachse des Stiels (2) verlaufenden, stegförmigen Greifbereich (41) aufweist.

5. Gabel (1) nach Anspruch 4, **dadurch gekennzeichnet, dass** an einem oder vorzugsweise beiden Enden des stegförmigen Greifbereichs (41) je ein Verbindungsschenkel (39, 40) vorgesehen ist, vorzugsweise wobei die beiden freien Enden der über den stegförmigen Greifbereich (41) miteinander verbundenen Verbindungsschenkel (39, 40) von dem stegförmigen Greifbereich (41) aus zueinander konvergieren.

6. Gabel (1) nach Anspruch 5, **dadurch gekennzeichnet, dass** die beiden freien Enden der über den stegförmigen Greifbereich (41) miteinander verbundenen Verbindungsschenkel (39, 40) an ihren freien Enden jeweils mit einem muffenförmigen Steckanschluss (36) verbunden sind, vorzugsweise wobei der stegförmige Greifbereich (41) zusammen mit den beiden Verbindungsschenkeln (39, 40) und dem muffenförmigen Steckanschluss (36) eine ringförmige Gestalt aufweist.

7. Gabel (1) nach Anspruch 6, **dadurch gekennzeichnet, dass** ein beweglicher, von außen zugänglicher Teil des elektromechanischen Betätigungselements (45) sich von dem stegförmigen Greifbereich (41) aus nach innen in den Innenraum des ringförmigen Griffs (6) hinein erstreckt, wo er von der ringförmigen Gestalt des Griffs (6) schützend umgeben ist.

8. Gabel (1) nach einem der vorhergehenden Ansprüche, **dadurch gekennzeichnet, dass** ein beweglicher, von außen zugänglicher Teil (46) des elektromechanischen Betätigungselements (45) von einer bevorzugt gummielastischen Kappe (47) schützend umgeben ist, vorzugsweise wobei die gummielastische Kappe (47) zu ihrer Fixierung zwischen dem Korpus des Griffs (6) und dem Gehäuse des elektromechanischen Betätigungselements (45) eingeklemmt ist.

9. Gabel (1) nach einem der vorhergehenden Ansprüche, **dadurch gekennzeichnet, dass** sich innerhalb des Stiels (2) ein oder mehrere Akkus oder Batterien befinden zur Versorgung eines elektrischen Aktuators der Rütteleinrichtung mit Strom.

10. Gabel (1) nach Anspruch 9, **dadurch gekennzeichnet, dass** die Akkus über ein Ladegerät aufladbar sind, insbesondere über ein mit dem Stromnetz gekoppeltes oder koppelbares Ladegerät.

11. Gabel (1) nach Anspruch 10, **gekennzeichnet durch** eine Schnittstelle zur Verbindung der Akkus mit dem Ladegerät, wobei die Schnittstelle bevorzugt als Steckeinrichtung ausgebildet ist, insbesondere als Steckbuchse (43), vorzugsweise wobei die Steckeinrichtung, insbesondere Steckbuchse (43), an dem von dem Stiel (2) bevorzugt lösbaren Griff (6) angeordnet ist.

12. Gabel (1) nach einem der vorhergehenden Ansprüche, **dadurch gekennzeichnet, dass** die Zinken (3) der Gabel (1) aus Kunststoff bestehen, während der Stiel (2) der Gabel (1) aus Metall besteht.

## Claims

1. Fork (1) for collecting animal excrement, in particular horse droppings, comprising a handle (2) and a plurality of tines (3), which, after activation of an electromechanical actuation element (4), can be set into rapid oscillation by a jiggling device (5) arranged in the handle (2) so as to separate the animal excrement from shavings and other bedding material, wherein the jiggling device (5) is driven by an electric motor (26), **characterized in that** the coupling between the electromechanical actuation element (4) and the jiggling device (5) comprises an attenuator, which allows mechanical oscillations issued from the jiggling device (5) or electric cut-in or cut-off pulses to pass onto an electromechanical switch (49) of the electromechanical actuation element (4) only in an attenuated extent, wherein
a) the electromechanical switch (49) of the electromechanical actuation element (4) is not arranged at the handle (2) itself, but is indirectly connected therewith, namely is arranged on a grip (6) plugged together with the upper end of the handle (2), wherein the mating surfaces facing each other, of one or both plug elements, are provided with one or a plurality of projections (38) so that only said projections (38) make contact with the other plug element, and wherein
b) the activation current of the electric motor (26) does not flow through the electromechanical switch (49) of the electromechanical actuation element (4), but through a contactless electronic switch element (53), which, for the actuation thereof, is electrically coupled to the electromechanical switch (49) of the electromechanical actuation element (4).

2. Fork (1) according to Claim 6, **characterized in that** the grip (6), which is plugged together with the upper end of the handle (2), is fixed.

3. Fork (1) according to Claim 1 or 2, **characterized in that** a plurality of projections (38) are provided on the inner side (37) of a sleeve-shaped plug connection (36) connected to the grip (6), which projections make contact with the related surface of the handle (2), and/orvice versa, especially wherein every projection (38) is configured as an elongated protrusion, in particular with a longitudinal axis parallel to the longitudinal axis (16) of the handle (2).

4. Fork (1) according to one of the preceding claims, **characterized in that** the grip (6) that can be fit together, in particular plugged together, with the handle (2) has an, in itself elongated, bar-shaped gripping region (41) extending transversely to the longitudinal axis of the handle (2).

5. Fork (1) according to Claim 4, **characterized in that** a connecting leg (39, 40) is provided on one or preferably both ends of the bar-shaped gripping region (41), preferably wherein the two free ends of the connecting legs (39, 40) that are connected to each other via the bar-shaped gripping region (41) converge towards each other from the bar-shaped gripping region (41).

6. Fork (1) according to Claim 5, **characterized in that** the two free ends of the connecting legs (39, 40) that are connected to each other via the bar-shaped gripping region (41) are each connected on the free ends thereof with a sleeve-shaped plug connection (36), preferably wherein the bar-shaped gripping region (41) together with the two connecting legs (39, 40) and the sleeve-shaped plug connection (36) have an annular shape.

7. Fork (1) according to Claim 6, **characterized in that** a moveable part of the electromechanical actuation element (45), which part is accessible from the outside, extends from the bar-shaped gripping region (41) inwardly into the interior space of the annular grip (6), where it is surrounded in a protective manner by the annular shape of the grip (6).

8. Fork (1) according to one of the preceding claims, **characterized in that** a moveable part (46) of the electromechanical actuation element (45), which part is accessible from the outside, is surrounded in a protective manner by a preferably rubber-elastic cap (47), preferably wherein the rubber-elastic cap (47) is clamped for fixation thereof between the body of the grip (6) and the housing of the electromechanical actuation element (45).

9. Fork (1) according to one of the preceding claims, **characterized in that** one or a plurality of accumulators or batteries are located inside the handle (2) for supplying an electric actuator of the jiggling device with power.

10. Fork (1) according to Claim 9, **characterized in that** the accumulators can be charged via a charging device, in particular via a charging device that is coupled to or can be coupled to the power supply network.

11. Fork (1) according to Claim 10, **characterized by** an interface for connecting the accumulators to the charging device, wherein the interface is preferably configured as a plug-in device, in particular as a plug socket (43), preferably wherein the plug-in device, in particular the plug socket (43), is arranged on the grip (6) that can preferably be detached from the handle (2).

12. Fork (1) according to one of the preceding claims, **characterized in that** the tines (3) of the fork (1) consist of plastic, whereas the handle (2) of the fork (1) consists of metal.

## Revendications

1. Fourche (1) servant à ramasser des crottes d'animaux, en particulier du crottin de cheval, comprenant un manche (2) et une pluralité de pointes (3) pouvant être mises en vibration à une vitesse rapide par activation d'un élément d'actionnement électromécanique (4) commandant un dispositif vibratoire (5) disposé dans le manche (2) pour séparer les crottes d'animaux des copeaux et autres produits d'épandage, en ce que le dispositif vibratoire (5) est entraîné par un moteur électrique (26), **caractérisée en ce que** le couplage entre l'élément d'actionnement électromécanique (4) et le dispositif vibratoire (5) comporte un atténuateur lequel laisse passer des vibrations mécaniques provenant du dispositif vibratoire (5) ou des impulsions d'activation/désactivation électriques uniquement dans une mesure atténuée par rapport à un commutateur électromécanique (49) de l'élément d'actionnement électromécanique (4), **en ce que**
a) le commutateur électromécanique (49) de l'élément d'actionnement électromécanique (4) n'est pas lui-même disposé sur le manche (2) mais relié indirectement à celui-ci, à savoir est disposé au niveau d'une poignée (6) assemblée avec l'extrémité supérieure du manche (2), **en ce que** les surfaces enfichables tournées l'une vers l'autre d'un ou de deux éléments enfichables sont pourvues respectivement d'une ou de plusieurs saillies (38) de telle sorte que seules ces saillies (38) entrent en contact avec l'autre élément enfichable et **en ce que**
b) le courant d'activation du moteur électrique (26) ne circule pas par le commutateur électromécanique (49) de l'élément d'actionnement électromécanique (4), mais par un élément de commutation électronique sans contact (53) qui est couplé électriquement pour son actionnement au commutateur électromécanique (49) de l'élément d'actionnement électromécanique (4).

2. Fourche (1) selon la revendication 1, **caractérisée en ce que** la poignée (6) assemblée avec l'extrémité supérieure du manche (2) est fixée.

3. Fourche (1) selon la revendication 1 ou 2, **caractérisée en ce qu'**au niveau du côté intérieur (37) d'une connexion enfichable (36) en forme de manchon, reliée à la poignée (6) sont prévues plusieurs saillies (38) qui entrent en contact avec la surface correspondante du manche (2), et/ou inversement, en particulier **en ce que** chaque saillie (38) est réalisée sous forme de protubérances allongées, en particulier avec un axe longitudinal parallèle à l'axe longitudinal (16) du manche (2).

4. Fourche (1) selon l'une des revendications précédentes, **caractérisée en ce que** la poignée (6) pouvant être assemblée, en particulier enfichée avec le manche (2) comporte une zone de préhension (41) en soi allongée, en forme de nervure, s'étendant transversalement à l'axe longitudinal du manche (2).

5. Fourche (1) selon la revendication 4, **caractérisée en ce qu'**au niveau d'une ou de préférence des deux extrémités de la zone de préhension en forme de nervure (41) est prévue respectivement une branche de liaison (39, 40), de préférence **en ce que** les deux extrémités libres des branches de liaison (39, 40) reliées entre elles par la zone de préhension en forme de nervure (41) convergent l'une vers l'autre à partir de la zone de préhension en forme de nervure (41).

6. Fourche (1) selon la revendication 5, **caractérisée en ce que** les deux extrémités libres des branches de liaison (39, 40) reliées entre elles par la zone de préhension en forme de nervure (41) sont reliées au niveau de leurs extrémités libres respectivement à une connexion enfichable (36) en forme de manchon, de préférence **en ce que** la zone de préhension en forme de nervure (41) avec les deux branches de liaison (39, 40) et la connexion enfichable (36) en forme de manchon présente une forme annulaire.

7. Fourche (1) selon la revendication 6, **caractérisée en ce qu'**une partie mobile, accessible de l'extérieur de l'élément d'actionnement électromécanique (45) s'étend à partir de la zone de préhension en forme de nervure (41) vers l'intérieur dans l'espace intérieur de la poignée annulaire (6) où elle est entourée de manière protectrice par la forme annulaire de la poignée (6).

8. Fourche (1) selon l'une des revendications précédentes, **caractérisée en ce qu'**une partie mobile, accessible de l'extérieur (46) de l'élément d'actionnement électromécanique (45) est entourée de manière protectrice d'un capuchon avantageusement caoutchouteux (47), de préférence **en ce que** le capuchon caoutchouteux (47) est coincé pour sa fixation entre le corps de la poignée (6) et le boîtier de l'élément d'actionnement électromécanique (45).

9. Fourche (1) selon l'une des revendications précédentes, **caractérisée en ce qu'**un ou plusieurs accus ou batteries sont à l'intérieur du manche (2) pour alimenter en courant un actionneur électrique du dispositif vibratoire.

10. Fourche (1) selon la revendication 9, **caractérisée en ce que** les accus sont rechargeables au moyen d'un chargeur, en particulier au moyen d'un chargeur couplé ou pouvant être couplé au réseau électrique.

11. Fourche (1) selon la revendication 10, **caractérisée par** une interface pour le raccordement des accus au chargeur, en ce que l'interface est réalisée avantageusement sous forme de dispositif enfichable, en particulier sous forme de fiche femelle (43), de préférence en ce que le dispositif enfichable, en particulier la fiche femelle (43) est disposé au niveau de la poignée (6) avantageusement détachable du manche (2).

12. Fourche (1) selon l'une des revendications précédentes, **caractérisé en ce que** les pointes (3) de la fourche (1) sont en matière plastique tandis que le manche (2) de la fourche (1) est en métal.
